# EUROPEAN PATENT SPECIFICATION

(11) **EP 0 915 122 B1**
(45) Date of publication and mention of the grant of the patent: **13.11.2002**
(21) Application number: 98308128.2
(22) Date of filing: 06.10.1998
(51) Int. Cl.: C08J 3/03, C08L 83/04

(54) **PROSESS FOR PREPARING SILICONE LATEXES**
VERFAHREN ZUR HERSTELLUNG VON SILICONLATEXEN
PROCEDE DE PREPARATION DES LATEXES DE SILICONE

(30) Priority: 09.10.1997 US 947991
(43) Date of publication of application: 12.05.1999
(73) Proprietor: DOW CORNING CORPORATION, Midland Michigan 48686-0994 (US)
(72) Inventor: Joffre, Eric Jude, Midland, Michigan 48642 (US); Seaton, Pamela Jean, Midland, Michigan 48642 (US); Wrolson, Burt Michael, Midland, Michigan 48640 (US)
(74) Representative: Kyle, Diana

(56) References cited:
- EP-A- 0 285 391
- EP-A- 0 739 929
- EP-A- 0 739 947
- EP-A- 0 771 855
- EP-A- 0 781 798
- EP-A- 0 839 853
- EP-A- 0 839 970

## Description

This invention relates to a process for preparing a silicone latex wherein a premix, comprising polydiorganosiloxane and crosslinker, is first formed before emulsification. Thereafter, the silicone latex is formed at a temperature no higher than 60°C. by mixing surfactant and water with said premix. The resulting silicone latex may be diluted with additional water, if desired. A process for continuously preparing a silicone latex is also described and claimed.

A silicone latex is a dispersion of siloxane polymers in water made by crosslinking chemistry. Crosslinking of the siloxane polymers may take place either before or after the evaporation of the water, although crosslinking prior to water evaporation is more common. Upon water evaporation, these silicone emulsions conveniently produce silicone elastomers useful, for example, as a coating, sealant or caulk.

The conditions used to prepare silicone latex affect the performance and properties of said silicone latex and the resulting silicone elastomer. A silicone latex may also be prepared, for example, using a batch or semi-batch method. However, these methods are problematic primarily due to equipment cleaning concerns. After a silicone latex is prepared in a batch mixer, the material remaining in the equipment after recovery of the silicone latex will devolatize and will even remain on the equipment. The remaining silicone elastomer must be removed either prior to preparing the next lot of material or after the next lot of material is prepared.

It is also desirable to use a continuous process which does not suffer from this problem because in a continuous process, the surfaces that are prone to accumulation of silicone elastomer are constantly wetted. It has been difficult, however, to prepare a useful silicone latex by a continuous process because the crosslinker tends to react with the water usually present in the system. We have surprisingly determined that a useful silicone latex is readily prepared by a continuous process when the crosslinker and polydiorganosiloxane are premixed prior to emulsification and the silicone latex is then formed at a temperature no higher than 60°C.

An objective of this invention is to provide a process for continuously preparing a silicone latex.

The present invention provides a process for continuously preparing a silicone latex comprising: (A) continuously supplying to a first mixer a polydiorganosiloxane and from 0.1 to 20 parts by weight, based on 100 parts by weight of said polydiorganosiloxane, of a crosslinker selected from the group consisting of linear aminoxy-functional siloxanes described by formula R₃SiO(R₂SiO)ₘ(RSi(ONR'₂)O)ₙSiR₃, cyclic aminoxy-functional siloxanes described by formula (R₂SiO)ₚ(RSi(ONR'₂)O)_{q}, aminoxy-functional silanes described by formula R_{c}Si(ONR'₂)_{4-c} and partial hydrolysis products thereof, where each R and R' are independently selected from the group consisting of alkyl radicals comprising 1 to 8 carbon atoms, m is an integer from 1 to 20, n and q are independently an integer from 3 to 7, p is an integer from 0 to 4, p+q is an integer from 3 to 7 and c is 0 or 1, thereby forming a premix; and (B) continuously supplying said premix (A) to a second mixer and further continuously supplying to said second mixer from 0.5 to 10 parts by weight of a surfactant and from 0.5 to 10 parts by weight of water, based on 100 parts by weight of said polydiorganosiloxane, wherein said second mixed is operated at a maximum circumferential speed of from 0% to 6 m/s, thereby forming a silicone latex at a temperature no higher than 60°C.

An important aspect of this invention is the initial formation of a premix comprising polydiorganosiloxane and crosslinker. It is preferred that this premix be homogeneous. By the term homogeneous", we mean that there is a substantially uniform distribution of crosslinker within the polydiorganosiloxane. The polydiorganosiloxane and crosslinker useful in our claimed invention require no catalyst for crosslinking to occur. Therefore, it is preferable that the rate of mixing of the premix be greater than the rate of crosslinking between said crosslinker and polydiorganosiloxane. The premix may be formed in the presence of a surfactant or the surfactant may be added to the premix in a separate step. It is preferred herein that said surfactant is added to the premix in a separate step.

The term "polydiorganosiloxane" as used herein comprises polydiorganosiloxane compositions having mixtures of various polydiorganosiloxanes as well as those compositions having only a single polydiorganosiloxane. This polydiorganosiloxane may also comprise a homopolymer, copolymer and terpolymer. In addition, said polydiorganosiloxane may comprise different kinds of molecules, such as long chain linear or branched molecules and short chain linear or branched molecules. Long chain linear molecules are preferred.

Although not critical to this invention, the viscosity of the polydiorganosiloxane is in the range of 5,000 to 500,000 mPa·s at 25°C., and preferably 10,000 to 100,000 mPa·s at 25°C. However, higher molecular weight polymers can be used if the viscosity is adjusted, for example, by dilution with solvent or dilution by polymer blending.

Preferred organic groups of said polydiorganosiloxane are substituted or unsubstituted hydrocarbon radicals comprising from 1 to 6 carbon atoms, such as methyl, ethyl, propyl, vinyl, phenyl and 3,3,3 trifluoropropyl radicals. The most preferred group is methyl.

It is preferred that the polydiorganosiloxane is completely endblocked or partially endblocked with silanol groups or partially endblocked by trimethylsiloxy groups. Silanol endblocked polydiorganosiloxane is most preferred.

The crosslinker useful in the present invention is selected from the group consisting of linear aminoxy-functional siloxanes described by formula R₃SiO(R₂SiO)ₘ(RSi(ONR'₂)O)ₙSiR₃, cyclic aminoxy-functional siloxanes described by formula (R₂SiO)ₚ(RSi(ONR'₂)O)_{q}, aminoxy-functional silanes described by formula R_{c}Si(ONR'₂)_{4-c} and partial hydrolysis products thereof. In the above formulas, R and R' are each independently selected from alkyl groups comprising 1 to 8 carbon atoms. Examples of R and R' include methyl, ethyl, propyl, hexyl or octyl. R and R' are preferably methyl or ethyl. R is more preferably methyl and R' is more preferably ethyl. Subscript m is an integer from 1 to 20, n and q are independently an integer from 3 to 7, p is an integer from 0 to 4, p+q is an integer from 3 to 7 and c is 0 or 1. The linear and cyclic aminoxy crosslinkers may have random or block sequencing of the units (R₂SiO)ₘ, (RSi(ONR'₂)O)ₙ, (R₂SiO)ₚ, (RSi(ONR'₂)O)_{q} as applicable.

The linear and cyclic aminoxy-functional siloxanes and the aminoxy-functional silanes described above may hydrolyze to some extent prior to emulsification. Therefore, these partial hydrolysis products are also included herein as useful crosslinkers in the present invention.

Examples of linear aminoxy-functional siloxanes include copolymers having average formulas (Me₃Si(ONEt₂)O)₅SiMe₃, Me₃SiO(Me₂SiO)₄(MeSi(ONEt₂)O)₅SiMe₃, Me₃SiO(Me₂SiO)₅(MeSi(ONEt₂)O)₃SiMe₃ and Me₃SiO(Me₂SiO)₃(MeSi(ONEt₂)O)₇SiMe₃, where Me and Et are and hereafter denote methyl and ethyl, respectively.

Examples of cyclic aminoxy-functional siloxanes include copolymers having average formulas (MeEtSiO)₂(MeSi(ONEt₂)O)₃, (Me₂SiO)₂(MeSi(ONEt₂)O)₃, (MeEtSiO)₂(MeSi(ONEt₂)O)₄, (MeSi(ONEt₂)O)₅ and (Me₂SiO)(MeSi(ONEt₂)O)₄.

Examples of aminoxy-functional silanes include MeSi(ONEt₂)₃ and EtSi(ONEt₂)₃.

It is preferred that our crosslinker is selected from the group consisting of cyclic aminoxy-functional siloxanes described by formula (R₂SiO)ₚ(RSi(ONR'₂)O)_{q} and linear aminoxy-functional siloxanes described by formula R₃SiO(R₂SiO)ₘ(RSi(ONR'₂)O)ₙSiR₃, where R, R', p, q , m and n are as defined above. It is more preferred that the crosslinker comprises a linear aminoxy-functional siloxane described by formula R₃SiO(R₂SiO)ₘ(RSi(ONR'₂)O)ₙSiR₃, where R, R', m and n are as defined above, with the linear aminoxy-functional siloxane described by average formula Me₃SiO(Me₂SiO)₃(MeSi(OMEt₂)O)₅SiMe₃ being most preferred.

The crosslinker is added to the present invention in an amount from 0.1 to 20 parts by weight, based on 100 parts by weight of the polydiorganosiloxane. Preferably, from 1 to 5 parts by weight, based on 100 parts by weight of the polydiorganosiloxane, of the crosslinker is added. The crosslinker may be added as a single species or as a mixture of two or more species.

A surfactant is also added to the present invention. The term "surfactant" generally describes a surface active agent. Any conventional anionic surfactant, nonionic surfactant, cationic surfactant, amphoteric surfactant, polymeric surfactant or mixtures thereof can be successfully used in this invention.

Examples of anionic surfactants include alkali metal or ammonium salts of long chain alkyl sulfates and sulfonates and the alkylene oxide condensates of long chain alcohols or fatty acids. Specific examples are dodecylbenzenesulfonate, sodium lauryl sulfate and sodium dioctyl sulfosuccinate.

Examples of nonionic surfactants include polyoxyalkylene alkyl ethers, polyoxyalkylene sorbitan esters, polyoxyalkylene esters, polyoxyalkylene alkylphenyl ethers, ethoxylated amides, ethoxylated siloxanes, block copolymers of propylene oxide and ethylene oxide. Specific examples include ethoxylated trimethylnonanol, TERGITOL™ TMN-6 and TERGITOL™ TMN-10 (manufactured by Union Carbide Corporation, Danbury, CT.

Cationic surfactants include quaternary ammonium salts, amine oxides, imidizolines, amidoamines and ethoxylated amines. Specific examples include ARQUAD™ T27W, ARQUAD™ 16-29, ARQUAD™ C-33, ARQUAD™ T-50 and ETHOQUAD™ T/13 Acetate, all manufactured by AKZO CHEMIE, Chicago, IL; and MACKALENE™ 216, a product of The McIntyre Group, Ltd, University Park, IL.

Amphoteric surfactants include mono- or diacetates, aminopropionates, dihydroxyl alkyl glycinates, sulfoamphoterics, betaines and sultaines. Specific examples include MACKAM™ 2CY, MACKAM™ 1C, MACKAM™ 160C-30, MACKAM™ TM, MACKAM™ CS, MACKAM™ 35 AND MACKAM™ CBS-50, all manufactured by The McIntyre Group. Also, SHERCOTAINE™ SCAB, a product of Scher Chemicals, Inc., Clifton, NJ is suitable herein.

Polymeric surfactants include polyvinylalcohols, polyvinylpyrolidones and polyacrylic acid polymers. Specific examples include AIRVOL™ 125, AIRVOL™ 205S, AIRVOL™ 523S and AIRVOL™ 540S all manufactured by Air Products and Chemicals, Inc., Allentown, PA. Also covered are PVP-K15™, PVP-K30™, PVP K-60™, PVP-K60™ and PVP-K90™ all manufactured by International Specialty Products Corporation, Wayne, NJ. Also suitable are PEMULENT™ 1621 and PEMULEN™ 1622, all manufactured by BFGoodrich Specialty Chemicals, Cleveland, OH.

In this invention, nonionic and anionic surfactants are preferred, with nonionic being more preferred and ethoxylated trimethylnonanol being most preferred.

The amount of surfactant added to the present invention is that amount which stabilizes the silicone latex. An amount from 0.5 to 10 parts by weight, based on 100 parts by weight of the polydiorganosiloxane, is normally sufficient. Preferably, the surfactant is added in an amount from 2 to 6 parts by weight based on the polydiorganosiloxane. The surfactant may be conveniently added as a single species or as a mixture of two or more different species.

The timing for surfactant addition in the present invention is not critical. It may be added along with the polydiorganosiloxane and crosslinker; after the premix is formed; or any combination thereof. In preferred embodiments, the surfactant is added to the process after the premix is formed.

To form a silicone latex, both water and surfactant are mixed with the premix. As defined herein, "silicone latex" comprises silicone particles comprising at least partially crosslinked premix dispersed in water. Generally, the size of the particles therein will range from 300 to 60,000 nanometers (nm), and preferably from 300 to 3000 nm. The amount and nature of the crosslinking that occurs will depend on the amounts and types of ingredients used and the processing conditions. The silicone latex may also be aged for some period prior to use to ensure that the degree of crosslinking is adequate for the intended application.

It is preferred that only a relatively small amount of water be initially added to the present invention, generally from 0.5 to 10 parts by weight based on 100 parts by weight of the polydiorganosiloxane. Preferred water amounts are from 2 to 6 parts by weight on the same basis.

Once a silicone latex is formed; however, it is preferred to further dilute the silicone latex. Therefore, dilution water may be added to the present invention in preferred amounts from 5 to 9900 parts by weight, based on 100 parts by weight of the polydiorganosiloxane. More preferred dilution amounts of water are from 5 to 150 parts by weight on the same basis, with 5 to 25 parts by weight being most preferred.

We have unexpectedly determined that the temperature at which the silicone latex is formed is an important feature of the invention with regard to the performance and properties of both the silicone latex and the resulting silicone elastomer. The silicone latex must be formed at a temperature no higher than 60°C., with a temperature no higher than 50°C. being preferred, and a temperature no higher than 40°C. being more preferred.

Optional ingredients, including adhesion promoters, pigments, stabilizers, defoamers, in situ reinforcement resins, fungicides, biocides and fillers may be added at any time during our process, although it is preferred to add these ingredients after the silicone latex is formed.

The silicone latex formed by the present process may be recovered by any conventional means, such as transferring into pails, drums, bulk containers or cartridges. The silicone latex may also be prepared in a batch process, semi-batch process or a continuous process. In a preferred embodiment, the silicone latex is prepared in the continuous process described and claimed herein.

To form a silicone latex by our continuous process, first, a premix is formed by continuously supplying polydiorganosiloxane and crosslinker to a first mixer. Said polydiorganosiloxane and crosslinker may be continuously supplied to said first mixer together, so that some mixing occurs prior to the first mixer, or these components may be continuously supplied to the first mixer separately, with a premix consequently being formed therein. The first mixer may be either static or dynamic. Examples of useful static mixers include Kenics™ mixers (Chemineer, Inc., Dayton, OH) or Koch SMX™ mixers (Koch Engineering Company, Inc., Wichita, KS). Examples of useful dynamic mixers include Greerco™ pipeline mixer (Greerco Corp., Hudson, NH), Bematek™ in-line mixer, (Bematek Systems, Inc., Beverly, MA) and twin screw compounders. In preferred embodiments, the first mixer is a dynamic mixer due to ease of use. It is also preferred that this mixer be operated at a rotational speed such that the premix is substantially homogeneous, as defined above. The maximum circumferential speed will vary depending on the specific mixer used, but generally such speeds of 0.1 to 16 m/s are useful, with maximum circumferential speeds from 0.3 to 6 m/s being preferred. As used herein, "maximum circumferential speed" means the maximum velocity of the furthest moving surface from the center of the rotating shaft.

The premix that is formed in our first mixer is then continuously supplied to a second mixer where surfactant and water are also continuously supplied. A silicone latex is formed conveniently therein at a temperature no higher than 60°C. The surfactant and water may be continuously supplied to said second mixer together or each component may be continuously supplied to the second mixer separately. In addition, the surfactant may be in the form of an aqueous solution. The second mixer is preferably a dynamic mixer, as described above.

The silicone latex herein must be formed at a temperature no higher than 60°C., with a temperature no higher than 50°C. being preferred, and a temperature no higher than 40°C. being more preferred. A preferred manner for controlling the temperature is by the maximum circumferential speed of the second mixer. This speed of the second mixer will vary depending on the specific mixer used while maintaining the requirement of a maximum circumferential speed of from 0.1 to 6 m/s preferably from 1 to 6 m/s.

An optional but preferred step of this embodiment is the continuous supplying of the product silicone latex to a third mixer with a further continuously supplying to said mixer of dilution water to suitably dilute the silicone latex. The third mixer may also be a static or dynamic mixer, with a dynamic mixer being preferred. The maximum circumferential speed of this third mixer will vary depending on the specific mixer used; however, generally maximum circumferential speeds from about 0.1 to 16 m/s are useful to homogeneously disperse water into the silicone latex. Examples of the useful mixers are as described above. The silicone latex is then recovered by the same methods as described above.

In another embodiment of the invention, the polydiorganosiloxane, crosslinker and surfactant are all continuously supplied to a first mixer to form a premix in the presence of the surfactant. The polydiorganosiloxane, crosslinker and surfactant, may be continuously supplied to said first mixer already mixed; these components may each be continuously supplied to the first mixer separately; or two of the three components may be initially mixed and then combined with the third. For example, the polydiorganosiloxane and crosslinker are initially mixed and then the surfactant is added. This occurs either prior to entering the first mixer, or thereafter, such that a premix in the presence of the surfactant is readily formed therein. In this distinctive embodiment, the premix in the presence of the surfactant is then continuously supplied to a second mixer where water is also continuously supplied to form a silicone latex at a temperature no higher than 60°C. The mixers useful with this embodiment are those described above. The silicone latex is then diluted, as desired, in a third mixer and recovered by the above methods.

Although the mixers of this invention may be discrete mixers, capable of conducting each step, it is most preferred that at least the first and second mixer be part of a multi-stage or multi-zone mixer that does not contain an area where the premix will flow under laminar conditions, since plugging of that area may eventually occur.

### Examples

### Description of Swell/gel Extraction Method:

A film of silicone latex was prepared using 0.75 mm (30 mil) draw down shims and allowed to dry overnight. A small disc of the elastomeric film weighing between 0.15 and 0.25 g was cut using a #11 hole punch. The disc was placed in a glass jar containing 40g of hexane. The disc was allowed to swell for 2 hours at 23±2°C. The swollen weight was then determined by pouring the disc and hexane over a 0.149 mm (100 mesh) stainless steel screen, quickly blotting the bottom of the screen and fanning the top of the screen to remove any excess hexane. The swollen disc and the screen were quickly weighed. The swollen sample was dried at 23±2°C for two hours or until a constant weight was obtained to get the dried extracted elastomer weight.

### Example 1

In this Example 1, a premix was formed and the silicone latex was formed at a temperature no higher than 60°C:

Process configuration:
stage 1: rotor/stator dynamic mixer
stage 2: Bematek™ Model #250-4-V In-Line Mixer
stage 3: Bematek™ Model #2V In-Line Mixer
To the stage 1 mixer was fed 2.16 kg/min (4.75 lb/min) of a silanol endblocked polydimethylsiloxane (PDMS) having a DP (degree of polymerization) of 1500 and viscosity of 55,000 mPa·s at 25°C. and 43.5 g/min of a crosslinker having an average formula Me₃SiO(Me₂SiO)₃(MeSi(ONEt₂)O)₅SiMe₃, where Me and ET are methyl and ethyl, respectively, (2 parts by weight of crosslinker per 100 parts by weight of PDMS). The stage 1 mixer was operated at a rotational speed of 328 rpm providing a maximum circumferential speed (MCS) of 1.22 m/s (4.0 ft/s) and thereby forming a premix. To stage 2 was fed the above premix and 123 g/min of a mixture of 50.0% of 2,6,8-trimethyl-4-nonyloxypolyethyleneoxyethanol (Tergitol™ TMN-10 surfactant, 91% aqueous, Union Carbide Corporation, Danbury, CT) (2.85 parts by weight of surfactant per 100 parts by weight of PDMS) and 8.7% of 2-(methylamino)-2-methyl-1-propanol (AMP-95™, Ashland Chemical Company, Columbus, OH) (0.5 parts by weight per 100 parts by weight of PDMS) in water (2.36 parts by weight of water per 100 parts by weight of PDMS ). The stage 2 mixer was operated at a rotational speed of 1275 rpm providing a MCS of 3.81 m/s (12.5 ft/s) and a silicone latex was thereby formed. To the stage 3 mixer was fed the product silicone latex and 267 g/min of water (12.38 parts by weight of water per 100 parts of by weight of PDMS) to dilute the silicone latex. The stage 3 mixer was operated at a rotational speed of 6120 rpm providing a MCS of 15.24 m/s (50 ft/s). The silicone latex had a temperature of 40ºC. on exiting our process. The silicone latex was next allowed to crosslink for at least 24 hours. The intensity weighted mean particle size of the latex was 599 nm as measured by a Nicomp™ Model 370 Particle Size Analyzer (Pacific Scientific, Silver Spring, MD). A swell/gel extraction as described immediately above was utilized to quantify the extent of crosslinking of the silicone latex. The percent silicone gel (%gel) was 81 and the percent swell of the silicone latex film (%swell) was 1240. The silicone latex film dried to a nearly tack free silicone elastomer. The silicone latex was then formulated into an elastomeric coating that also exhibited good mechanical properties.

### Example 2

In this example, a premix was formed and the silicone latex was formed at a temperature no higher than 60°C:

Process configuration:
stage 1: rotor/stator dynamic mixer
stage 2: Bematek™ Model #250-4-V In-Line Mixer
stage 3: Bematek™ Model #2V In-Line Mixer

To the stage 1 mixer was fed 2.73 kg/min (6.0 lb/min) of a silanol endblocked polydimethylsiloxane (PDMS) having a DP of 1500 and viscosity of 55,000 mPa·s at 25°C. and 51.8 g/min of a crosslinker having an average formula Me₃SiO(Me₂SiO)₃(MeSi(ONEt₂)O)₅SiMe₃, (1.9 parts by weight of crosslinker per 100 parts by weight of PDMS). The stage 1 mixer was operated at a rotational speed of 246 rpm providing a MCS of 0.91 m/s (3.0 ft/s) and thereby forming a premix. To stage 2 was fed the above premix and 174 g/min of a mixture of 50.0% of Tergitol™ TMN-10 surfactant with 2.84 parts by weight of surfactant per 100 parts by weight of PDMS and 8.7% of AMP-95™ surfactant with 0.49 parts by weight of surfactant per 100 parts by weight of PDMS in water (3.06 parts by weight of water per 100 parts by weight of PDMS). The stage 2 mixer was operated at a rotational speed of 1275 rpm providing a MCS of 3.81 m/s (12.5 ft/s) and a silicone latex was thereby formed. To the stage 3 mixer was fed the product silicone latex and 317 g/min of water (11.64 parts by weight of water per 100 parts by weight of PDMS) to dilute the silicone latex. The stage 3 mixer was operated at a rotational speed of 6120 rpm providing a MCS of 15.24 m/s (50 ft/s). The temperature of all feed materials was 25°C. The resulting silicone latex had a temperature of 32ºC on exiting the process. This latex was allowed to crosslink for at least 24 hours. The intensity weighted mean particle size of the latex was 862 nm as measured by a Nicomp™ Model 370. A swell/gel extraction as described above was utilized to quantify the extent of crosslinking within the silicone latex. The % gel was 71 and the % swell was 1441. The silicone latex film dried to a tack free elastomer. The silicone latex was then formulated into an elastomeric coating that also achieved good mechanical properties.

### Example 3

In this example, a premix was formed and the silicone latex was formed at a MCS of 5.18 m/s.

Process configuration:
stage 1: rotor/stator dynamic mixer
stage 2: Bematek™ Model #250-4-V In-Line Mixer
stage 3: Bematek™ Model #2V In-Line Mixer

To the stage 1 mixer was fed 2.73 kg/min (6.0 lb/min) of a silanol endblocked polydimethylsiloxane (PDMS) having a DP of 1500 and viscosity of 55,000 mPa·s at 25°C. and 53 g/min of a crosslinker having an average formula Me₃SiO(Me₂SiO)₃(MeSi(ONEt₂)O)₅SiMe₃, (1.95 parts by weight of crosslinker per 100 parts by weight of PDMS). The stage 1 mixer was operated at a rotational speed of 370 rpm providing a MCS of 1.37 m/s (4.5 ft/s) and forming a premix. To the stage 2 mixer was fed the above premix and 175 g/min of a mixture of 44.4% of Tergitol™ TMN-10 surfactant, with 2.85 parts by weight of surfactant per 100 parts by weight of PDMS and 7.8% of AMP-95™ surfactant with 0.5 parts by weight of surfactant per 100 parts by weight of PDMS in water (3.07 parts by weight of water per 100 parts by weight of PDMS). The stage 2 mixer was operated at a rotational speed of 1700 rpm providing a MCS of 5.18 m/s (17 ft/s) and a silicone latex was thereby formed. To the stage 3 mixer was fed the product silicone latex and 317 g/min of water (11.64 parts by weight of water per 100 parts by weight of PDMS) to dilute the silicone latex. The stage 3 mixer was operated at a rotational speed of 6120 rpm providing a MCS of 15.24 m/s (50 ft/s). The temperature of all feed materials was 25ºC. The temperature of the resulting silicone latex upon exiting the process was not measured. This latex was also allowed to crosslink for at least 24 hours. The intensity weighted mean particle size of the latex was 900 nm as measured by a Nicomp™ Model 370. A swell/gel extraction as described above was again utilized to quantify the extent of crosslinking within the silicone latex. The % gel was 78 and the % swell was 1350. The silicone latex film dried to a tack free elastomer. The silicone latex was next formulated into an elastomeric coating that possessed good mechanical properties.

### Example 4 (Comparative)

In this example (not of this invention), a premix was formed and the silicone latex was formed at a temperature greater than 60°C:

Process configuration:
stage 1: rotor/stator dynamic mixer
stage 2: Bematek™ Model #250-4-V In-Line Mixer
stage 3: Bematek™ Model #2V In-Line Mixer

To the stage 1 mixer was fed 2.04 kg/min (4.5 lb/min) of a silanol endblocked polydimethylsiloxane (PDMS) having a DP of 1500 and viscosity of 55,000 mPa·s at 25°C. and 40 g/min of a crosslinker having an average formula Me₃SiO(Me₂SiO)₃(MeSi(ONEt₂)O)₅SiMe₃, (1.96 parts by weight of crosslinker per 100 parts by weight of PDMS). The stage 1 mixer was operated at a rotational speed of 328 rpm providing a MCS of 1.22 m/s (4.0 ft/s) and forming a premix. To stage 2 was fed the above premix and 116 g/min of a mixture of 50.0% of Tergitol™ TMN-10 surfactant, 2.84 parts by weight of surfactant per 100 parts by weight of PDMS) and 8.7% of AMP-95™, (0.49 part by weight of surfactant per 100 parts by weight of PDMS) in water (2.34 parts by weight of water per 100 parts by weight of PDMS). The stage 2 mixer was operated at a rotational speed of 4675 rpm providing a MCS of 14.02 m/s (46 ft/s) and a silicone latex was thereby formed. To the stage 3 mixer was fed the product silicone latex and 254 g/min of water (12.43 parts by weight of water per 100 parts by weight of PDMS) to dilute the silicone latex. The stage 3 mixer was operated at a rotational speed of 6120 rpm providing a MCS of 15.24 m/s (50 ft/s). The silicone latex had a temperature of 63ºC. on exiting this comparative process. This latex was allowed to crosslink for at least 24 hours. The intensity weighted mean particle size of the latex was 621 nm as measured by a Nicomp™ Model 370. A swell/gel extraction as described above was again utilized to try to quantify the extent of crosslinking within the silicone latex. The % gel and the % swell could not be determined because said latex formed a very tacky film without significant strength.

### Example 5 (Comparative)

In this example, no premix was formed before emulsification and the silicone latex was formed at a temperature no higher than 60°C:

Process configuration:
stage 1 & 2 combined: rotor/stator dynamic mixer
stage 3: Bematek™ Model #2V In-Line Mixer

To the stage 1 & 2 mixer was fed 2.82 kg/min (6.2 lb/min) of a silanol endblocked polydimethylsiloxane (PDMS) having a DP of 1500 and viscosity of 55,000 mPa·s at 25°C., 64 g/min of a crosslinker having an average formula Me₃SiO(Me₂SiO)₃(MeSi(ONEt₂)O)₅SiMe₃, (2.27 parts by weight of crosslinker per 100 parts by weight of PDMS) and 160 g/min of a mixture of 50.0% Tergitol™ TMN-10 surfactant, (2.84 parts by weight of surfactant per 100 parts by weight of PDMS)and 8.7% of AMP-95™ surfactant, (0.49 part by weight of surfactant per 100 parts by weight of PDMS) in water (2.35 parts by weight of water per 100 parts by weight of PDMS). The stage 1 & 2 mixer was operated at a rotational speed of 655 rpm providing a MCS of 2.44 m/s (8.0 ft/s) and a silicone latex was formed. To the stage 3 mixer was fed the product silicone latex and 338 g/min of water (12.01 parts by weight of water per 100 parts by weight of PDMS) to dilute the silicone latex. The stage 3 mixer was operated at a rotational speed of 6120 rpm providing a MCS of 15.24 m/sec (50 ft/s). The silicone latex had a temperature of 31ºC. on exiting the process. This comparative latex was allowed to crosslink for at least 24 hours. The intensity weighted mean particle size of the latex was 740 nm as measured by a Nicomp™ Model 370. A swell/gel extraction as described above was utilized to quantify the extent of crosslinking within the silicone latex. The % gel was 49 and the % swell was 1540. This silicone latex was thereafter formulated into an elastomeric coating that exhibited very poor mechanical properties.

## Claims

1. A process for continuously preparing a silicone latex comprising the steps of:
(1) continuously supplying to a first mixer a polydiorganosiloxane and from 0.1 to 20 parts by weight, based on 100 parts by weight of said polydiorganosiloxane, of a crosslinker selected from linear amino-functional siloxane of formula R₃SiO(R₂SiO)ₘ(RSi(ONR'₂)O)ₙSiR₃, cyclic aminoxy-functional siloxanes of formula (R₂SiO)ₚ(RSi(ONR'₂)O)_{q}, aminoxy-functional silanes of formula R_{c}Si(ONR'₂)_{4-c} and partial hydrolysis products thereof, where each R and R' are independently selected from alkyl radicals comprising 1 to 8 carbon atoms, m is an integer from 1 to 20, n and q are independently an integer from 3 to 7, p is o or an integer from 1 to 4, p+q is an integer from 3 to 7 and c is 0 or 1, thereby forming a premix; and
(2) continuously supplying 'said premix of step (1) to a second mixer and further continuously supplying to said second mixer from 0.5 to 10 parts by weight of a surfactant and from 0.5 to 10 parts by weight of water based on 100 parts by weight of said polydiorganosiloxane, wherein said second mixer is operated at a maximum circumferential speed of from 0.1 to 6 m/s, thereby forming a silicone latex at a temperature no higher than 60°C.

2. The process of claim 1 further comprising (3) continuously supplying said silicone latex of step (2) to a third mixer and further continuously supplying to said third mixer from 5 to 9900 parts by weight of dilution water, based on 100 parts by weight of said polydiorganosiloxane, to dilute the silicone latex.

3. The process according to claim 1 or 2, wherein the premix is homogeneous.

4. A process according to any of claims 1 to 3, wherein the crosslinker comprises from 1 to 5 parts by weight, based on 100 parts by weight of the polydiorganosiloxane, of a linear aminoxy-functional siloxane of formula R₃SiO(R₂SiO)ₘ(RSi(ONR'₂)O)ₙSiR₃, the polydiorganosiloxane is a silanol endblocked polydimethylsiloxane and the surfactant is an anionic or nonionic surfactant.

5. The process according to any of claims 1 to 4, wherein said premix is formed in the presence of a surfactant.

6. The process according to any of claims 1 to 4, wherein said premix is formed in the absence of a surfactant.

7. The process according to any of claims 1 to 6, wherein said second mixer is operated at a maximum circumferential speed from 1 to 6 m/s.

## Patentansprüche

1. Verfahren zur kontinuierlichen Herstellung eines Siliconlatex. umfassend die Schritte:
(1) kontinuierliches Zuführen eines Polydiorganosiloxans und 0,1 bis 20 Gewichtsteilen, bezogen auf 100 Gewichtsteile dieses Polydiorganosiloxans, eines Vernetzungsmittels, ausgewählt aus linearem aminofunktionellen Siloxan der Formel R₃SiO(R₂SiO)ₘ(RSi(ONR'₂)O)ₙSiR₃, cyclischen aminoxyfunktionellen Siloxanen der Formel (R₂SiO)ₚ(RSi(ONR'₂)O)_{q}, aminoxyfunktionellen Silanen der Formel R_{c}Si(ONR'₂)_{4-c} und partiellen Hydrolyseprodukten derselben, worin jedes R und R' unabhängig voneinander ausgewählt sind aus Alkylresten mit 1 bis 8 Kohlenstoffatomen, m eine ganze Zahl von 1 bis 20 ist, n und q unabhängig voneinander eine ganze Zahl von 3 bis 7 sind, p gleich 0 oder eine ganze Zahl von 1 bis 4 ist, p+q eine ganze Zahl von 3 bis 7 ist und c gleich 0 oder 1 ist, in einen ersten Mischer und dabei Bilden einer Vormischung und
(2) kontinuierliches Zuführen dieser Vormischung aus Schritt (1) in einen zweiten Mischer und weiterhin kontinuierliches Zuführen von 0,5 bis 10 Gewichtsteilen einer oberflächenaktiven Substanz und 0,5 bis 10 Gewichtsteilen Wasser, bezogen auf 100 Gewichtsteile dieses Polydiorganosiloxans, in diesen zweiten Mischer, wobei dieser zweite Mischer bei einer maximalen Umfangsgeschwindigkeit von 0,1 bis 6 m/s betrieben wird, und dabei Bilden eines Siliconlatex bei einer Temperatur von nicht mehr als 60°C.

2. Verfahren nach Anspruch 1, weiterhin umfassend (3) kontinuierliches Zuführen dieses Siliconlatex aus Schritt (2) in einen dritten Mischer und weiterhin kontinuierliches Zuführen von 5 bis 9900 Gewichtsteilen Verdünnungswasser, bezogen auf 100 Gewichtsteile dieses Polydiorganosiloxans, zu diesem dritten Mischer, um den Siliconlatex zu verdünnen.

3. Verfahren nach Anspruch 1 oder 2, wobei die Vormischung homogen ist.

4. Verfahren nach einem der Ansprüche 1 bis 3, wobei das Vernetzungsmittel 1 bis 5 Gewichtsteile, bezogen auf 100 Gewichtstelle des Polydiorganosiloxans, eines linearen aminoxyfunktionellen Siloxans der Formel R₃SiO(R₂SiO)ₘ(RSi(ONR'₂)O)ₙSiR₃ enthält, das Polydiorganosiloxan ein silanolendblockiertes Polydimethylsiloxan ist und die oberflächenaktive Substanz eine anionische oder nichtionische oberflächenaktive Substanz ist.

5. Verfahren nach einem der Ansprüche 1 bis 4, wobei diese Vormischung in Gegenwart einer oberflächenaktiven Substanz gebildet wird.

6. Verfahren nach einem der Ansprüche 1 bis 4, wobei diese Vormischung in Abwesenheit einer oberflächenaktiven Substanz gebildet wird.

7. Verfahren nach einem der Ansprüche 1 bis 6, wobei dieser zweite Mischer bei einer maximalen Umfangsgeschwindigkeit von 1 bis 6 m/s betrieben wird.

## Revendications

1. Procédé de préparation en continu d'un latex de silicone comprenant les étapes suivantes :
(1) introduction en continu dans un premier mélangeur d'un polydiorganosiloxane et de 0,1 à 20 parties en poids, sur la base de 100 parties en poids dudit polydiorganosiloxane, d'un agent de réticulation choisi parmi un siloxane amino-fonctionnel linéaire de formule R₃SiO(R₂SiO)ₘ(RSi(ONR'₂)O)ₙSiR₃, des siloxanes aminoxy-fonctionnels cycliques de formule R₂(SiO)ₚ(RSi(ONR'₂)O)_{q}, des silanes aminoxy-fonctionnels de formule R_{c}Si(ONR'₂)_{4-c} et des produits d'hydrolyse partielle de ces derniers, chaque R et R' étant choisi indépendamment parmi des radicaux alkyle comprenant de 1 à 8 atomes de carbone, m étant un nombre entier de 1 à 20, n et q étant indépendamment un nombre entier de 3 à 7, p étant 0 ou un nombre entier de 1 à 4, p+q étant un nombre entier de 3 à 7 et c étant 0 ou 1, formant ainsi un pré-mélange ; et
(2) introduction en continu dudit pré-mélange de l'étape (1) dans un second mélangeur et introduction en outre en continu, dans ledit second mélangeur, de 0,5 à 10 parties en poids d'un tensioactif et de 0,5 à 10 parties en poids d'eau sur la base de 100 parties en poids dudit polydiorganosiloxane, ledit second mélangeur fonctionnant à une vitesse circonférentielle maximale de 0,1 à 6 m/s, formant ainsi un latex de silicone à une température ne dépassant pas 60°C.

2. Procédé selon la revendication 1 comprenant en outre (3) l'introduction en continu dudit latex de silicone de l'étape (2) dans un troisième mélangeur et l'introduction en outre, en continu, dans ledit troisième mélangeur, de 5 à 9900 parties en poids d'eau de dilution, sur la base de 100 parties en poids dudit polydiorganosiloxane, pour diluer le latex de silicone.

3. Procédé selon l'une des revendications 1 ou 2, dans lequel le pré-mélange est homogène.

4. Procédé selon l'une quelconque des revendications 1 à 3, dans lequel l'agent de réticulation comprend de 1 à 5 parties en poids, sur la base de 100 parties en poids du polydiorganosiloxane, d'un siloxane aminoxy-fonctionnel linéaire de formule R₃SiO(R₂SiO)ₘ(RSi(ONR'₂)O)ₙSiR₃, le polydiorganosiloxane est un polydiméthylsiloxane silanol bloqué en extrémité et le tensioactif est un tensioactif anionique ou non ionique.

5. Procédé selon l'une quelconque des revendications 1 à 4, dans lequel ledit pré-mélange est formé en présence d'un tensioactif.

6. Procédé selon l'une quelconque des revendications 1 à 4, dans lequel ledit pré-mélange est formé en l'absence de tensioactif.

7. Procédé selon l'une quelconque des revendications 1 à 6, dans lequel ledit second mélangeur fonctionne à une vitesse circonférentielle maximale de 1 à 6 m/s.
